(19) **Europäisches Patentamt / European Patent Office / Office européen des brevets**

(11) **EP 4 696 817 A1**

(12) # EUROPEAN PATENT APPLICATION
published in accordance with Art. 153(4) EPC

(43) Date of publication:
**18.02.2026 Bulletin 2026/08**

(21) Application number: **24917573.8**

(22) Date of filing: **05.06.2024**

(51) International Patent Classification (IPC):
*C25D 1/04* (2006.01)     *C25D 5/18* (2006.01)
*C25D 3/38* (2006.01)     *H01M 4/66* (2006.01)
*H01M 10/0525* (2010.01)

(52) Cooperative Patent Classification (CPC):
**C25D 1/04; C25D 3/38; C25D 5/18; H01M 4/66; H01M 10/0525; Y02E 60/10**

(86) International application number:
**PCT/CN2024/097599**

(87) International publication number:
**WO 2025/251224 (11.12.2025 Gazette 2025/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Jiujiang Defu Technology Co., Ltd**
**Jiujiang, Jiangxi 332005 (CN)**

(72) Inventors:
• **GE, Hongxin**
  **Jiujiang, Jiangxi 332000 (CN)**

• **JIANG, Yang**
  **Jiujiang, Jiangxi 332000 (CN)**
• **LUO, Jia**
  **Jiujiang, Jiangxi 332000 (CN)**
• **SHAO, Yu**
  **Jiujiang, Jiangxi 332000 (CN)**
• **PAN, Deng**
  **Jiujiang, Jiangxi 332000 (CN)**
• **ZHAN, Junxiong**
  **Jiujiang, Jiangxi 332000 (CN)**

(74) Representative: **Canzler & Bergmeier**
**Patentanwälte**
**Partnerschaft mbB**
**Despag-Straße 6**
**85055 Ingolstadt (DE)**

(54) **COPPER FOIL AND PREPARATION METHOD THEREFOR, NEGATIVE ELECTRODE COMPRISING SAME, AND LITHIUM-ION BATTERY**

(57)     The present disclosure relates to the technical field of lithium-ion batteries, in particular, to a copper foil, a method for manufacturing the same, and a negative electrode and lithium-ion battery including the copper foil. The copper foil includes ultrafine grains and nanotwins, with an average grain size of 0.2-0.4 $\mu m$, an area-weighted average grain size of 0.3-0.8 $\mu m$, and a nanotwin grain proportion of the copper foil greater than 50%. The copper foil of the present disclosure is manufactured using a pulse electroplating technology, which allows control the average grain size and the nanotwin proportion of the copper foil, thereby endowing the copper foil with a high tensile strength and a high elongation. The method for manufacturing the copper foil according to the present disclosure also employs a specific electrolyte, enabling the copper foil to achieve a tensile strength of 600-900 MPa and an elongation greater than 5%.

A side

D side

FIG. 1

EP 4 696 817 A1

## Description

## FIELD OF TECHNOLOGY

The present disclosure relates to the technical field of lithium-ion batteries, in particular, to a copper foil, a method for manufacturing the same, and a negative electrode and lithium-ion battery including the copper foil.

## BACKGROUND

With the continuous increase in the electric vehicle stock and renewable energy installed capacity, the demand for lithium-ion batteries is rapidly growing.

Due to excellent conductivity, electrolytic copper foils are widely used in negative current collectors of the lithium-ion batteries. In addition, owing to good mechanical properties, the electrolytic copper foils also serve as the primary bearer of stress generated during battery manufacturing and use.

The main trend in the development of the lithium-ion batteries today is to improve the energy density and safety. The theoretical specific capacity of conventional graphite negative electrodes is only 372 Ah/kg, while new silicon-carbon negative electrodes are expected to achieve the energy density exceeding 3000 Wh/kg. The iteration of negative electrode materials will be the primary approach to improving the battery energy density in the near future. However, the volume of silicon-carbon negative electrode materials undergoes significant contraction/expansion during lithium-ion deintercalation/intercalation. Such phenomenon leads to volume changes during battery charge-discharge processes, thereby causing repeated stretching of the copper foil as the stress carrier. Conventional copper foil current collectors are prone to fracture due to excessive stretching during this process, causing internal short circuits in the battery and affecting battery safety and service life.

## SUMMARY

The present disclosure provides a copper foil, a method for manufacturing the same, and a negative electrode and lithium-ion battery including the copper foil, to solve the problem of existing copper foils as current collectors being prone to fracture due to excessive stretching during battery charge-discharge processes.

According to a first aspect of the present disclosure, a copper foil is provided. The copper foil includes ultrafine grains and nanotwins, with an average grain size of the copper foil of 0.2-0.4 $\mu$m, an area-weighted average grain size of 0.3-0.8 $\mu$m, and a nanotwin grain proportion of the copper foil greater than 50% as measured by electron backscatter diffraction (EBSD).

Further, an elongation of the copper foil is greater than 5%.

Further, a tensile strength of the copper foil is 600-900 MPa.

Further, a thickness of the copper foil is 4-10 $\mu$m.

According to a second aspect of the present disclosure, a method for manufacturing a copper foil is provided. The method includes the following steps:

electrolyzing an electrolyte using a pulse power supply at a predetermined pulse width and duty cycle to obtain a raw foil, where a current density of the pulse power supply is 8000-15000 A/m2, the pulse width is 1-50 ms, and the duty cycle is 1%-30%; the electrolyte includes an electrolytic additive, and the electrolytic additive includes a brightener with a content of 12-20 mg/L, an auxiliary brightener with a content of 4-10 mg/L, a leveler with a content of 2-8 mg/L, polyethylene glycol with a content of 2-10 mg/L, and an inhibitor with a content of 6-30 mg/L; and

washing and passivating the raw foil to obtain an electrolytic copper foil.

Further, the electrolyte further includes 60-120 g/L copper ions, 90-150 g/L sulfuric acid, and 20-40 mg/L chloride ions. Further, the brightener includes an organic sulfide; preferably, the brightener includes one or more of sodium polydisulfopropyl sulfonate, sodium polydisulfobutane sulfonate, and sodium 3-mercapto-1-propanesulfonate.

Further, the auxiliary brightener includes a nitrogen-containing organic sulfide; preferably, the auxiliary brightener includes one or more of polyisothiouronium propyl sulfonate inner salt, 3-benzothiazolyl-2-mercapto propane sulfonate sodium, N, N-dimethyl propane sulfonate sodium, and tetrahydrothiazole thione.

Further, the leveler includes a nitrogen-containing small-molecule compound; preferably, the leveler includes one or more of 2-mercaptopyridine, 2-amino-4-methylbenzothiazole, and tricyclazole.

Further, a molecular weight of polyethylene glycol is 4000-10000.

Further, the inhibitor includes a polyether compound, wherein a molecular weight of the polyether compound is less than or equal to 2000; preferably, the inhibitor includes one or more of polyethylene glycol with a molecular weight of 400-1000, polypropylene glycol with a molecular weight of 800-2000, and an ethylene glycol-propylene glycol copolymer with a molecular weight of 400-1000.

Further, a mass ratio of polyethylene glycol to the polyether compound is 1:2-1:4.

Further, a temperature of the electrolyzing is 50-60°C; during the electrolyzing, an upward flow rate of the electrolyte is 40-50 m$^3$/h.

According to a third aspect of the present disclosure, a negative electrode is provided. The negative electrode includes a negative current collector, where the negative current collector includes a metal foil, and the metal foil includes the copper foil according to any embodiment of the first aspect.

According to a fourth aspect of the present disclosure, a lithium-ion battery is provided. The lithium-ion battery includes a negative electrode, where the negative electrode includes the negative electrode according to any embodiment of the third aspect.

The technical solutions according to the present disclosure have the following beneficial effects:

The copper foil provided by the present disclosure has highly refined grain sizes, and the introduction of nanotwin structures in the microscopic grain configuration can regulate the mechanical properties of the electrolytic copper foil. The coherent boundaries of nanotwins can effectively hinder dislocation motion, strengthening the material. In addition, when the deformation stress is sufficiently high, dislocations can also slip along the coherent twin boundaries, thereby effectively improving the plasticity and work-hardening capability of the material, ensuring a high elongation of the electrolytic copper foil.

According to the present disclosure, the method for manufacturing the copper foil employs a pulse electroplating technology, enabling controllable adjustment of the crystalline microstructure compared to conventional direct current electroplating processes. Electrolytic copper foils with different microscopic grain sizes are constructed by using the pulse electroplating technology. Power supply parameters including peak current, pulse width, and duty cycle are adjusted, so that the growth cycle and stress release process of microscopic copper grains can be altered, thereby adjusting the grain size and nanotwin proportion, allowing the tensile strength of the electrolytic copper foil to be adjusted within the range of 600-900 MPa.

## BRIEF DESCRIPTION OF THE DRAWINGS

To more clearly illustrate the technical solutions of the present disclosure or the related art, the following briefly introduces the accompanying drawings required for describing the embodiments or the related art. Obviously, the accompanying drawings in the following description are some embodiments of the present disclosure. For those of ordinary skill in the art, other drawings can be obtained based on these drawings without creative effort.

FIG. 1 is a cross-sectional EBSD crystalline structure diagram of an electrolytic copper foil manufactured according to Example 4 of the present disclosure.

FIG. 2 is a cross-sectional EBSD crystalline structure diagram of an electrolytic copper foil manufactured according to Comparative Example 1 of the present disclosure.

FIG. 3 is a comparison diagram of tensile strengths and elongations of electrolytic copper foils manufactured according to Example 4 and Comparative Example 1 of the present disclosure.

## DETAILED DESCRIPTION

To make the objectives, technical solutions, and advantages of the present disclosure clearer, the following clearly and completely describes the technical solutions of the present disclosure. Obviously, the described embodiments are a part of the embodiments of the present disclosure, rather than all of them. Based on the embodiments of the present disclosure, all other embodiments obtained by those of ordinary skill in the art without creative effort shall fall within the protection scope of the present disclosure.

As analyzed in the background, electrolytic copper foils in the related art are prone to fracture due to excessive stretching during battery charge-discharge processes, causing internal short circuits in a battery and affecting battery safety and service life.

Generally, grain refinement in polycrystalline metal materials can effectively improve tensile strength of the materials, but plasticity of the materials significantly decreases. Therefore, it is difficult to obtain copper foils with both ultra-high tensile strengths and high elongations using conventional methods of introducing grain boundary impurities. Nanotwinned metals have unique mechanical properties, maintaining good elongations while possessing extremely high tensile strengths, which stems from the interaction between coherent boundaries and dislocation defects within nanotwins. In one aspect, twin boundaries can effectively hinder dislocation motion. When the stress is sufficiently high, dislocations react with and pass through twin boundaries. In another aspect, twin boundaries are also slip planes for face-centered cubic (FCC) metal materials. Dislocations can not only move along twin boundaries, but coherent boundaries can also provide storage space for dislocations generated during deformation, thereby effectively improving the elongation of copper foils.

However, manufacturing nanoscale twin layers and achieving controllable growth of nanotwin structures is not easy. The formation of nanotwins is kinetically driven. Increasing the cathode overpotential favors higher nucleation rates during electrodeposition, resulting in samples with finer grain sizes. According to the description of the Butler-Volmer equation in the electrochemical theory, without considering the mass transfer effect, the polarization current increases exponentially with overpotential. Therefore, increasing a current density is a conventional method to enhance cathode polarization. Further considering the mass transfer process, rapid consumption of $Cu^{2+}$ on the electrode surface under a high current density leads to a significantly lower concentration of $Cu^{2+}$ compared to the bulk solution, resulting in substantial concentration polarization and overpotential. However, studies show that during direct current electroplating processes, the thickness of twin layers does not exhibit a strong correlation with the current density, possibly due to the lower energy of coherent boundaries compared to ordinary high-angle grain boundaries. Twins often nucleate at grain boundaries or triple junctions, and overall grain boundary energy is reduced through twinning-induced grain orientation changes. The continuous current during direct current electroplating generates high cumulative stress, resulting in higher grain boundary energy. In contrast, stress accumulation and relaxation during pulse electroplating favor reduced grain boundary energy and promote twin growth. During pulse current-on time, numerous nuclei form, generating tensile stress within the coating and accumulating elastic strain energy. During pulse current-off time, tensile stress is released, promoting nanotwin formation via recrystallization in the coating. Thus, adjusting a pulse width and duty cycle is key to controlling the nanotwin proportion of samples and achieving an ultra-high tensile strength and a high elongation. The pulse electroplating technology can also achieve a higher instantaneous current density, resulting in a smaller grain size and a higher tensile strength.

In a first typical embodiment of the present disclosure, a copper foil is provided. The copper foil includes ultrafine grains and nanotwins, with an average grain size of the copper foil of 0.2-0.4 $\mu$m, an area-weighted average grain size of 0.3-0.8 $\mu$m, and a nanotwin grain proportion of the copper foil greater than 50% as measured by EBSD.

It should be noted that the grain size of conventional double-sided bright lithium-ion battery copper foils is generally greater than 1 $\mu$m, and grains with sizes less than 1 $\mu$m are defined as ultrafine grains. The ultrafine grains in the present disclosure refer to grains with sizes less than 1 $\mu$m. The average grain size and the area-weighted average grain size are measured by electron backscatter diffraction, both of which are calculated using the following formulas:

$$\text{Average grain size} = \frac{\sum_d n_d d}{\sum_d n_d}$$

$$\text{Area} - \text{weighted average grain size} = \frac{\sum_d n_d S_d d}{\sum_d n_d S_d}$$

d is the size of a single grain, $n_d$ is the number of grains whose size is $d$, and $S_d$ is the area of a grain whose size is d. In the above solution, the copper foil with the above average grain size and area-weighted average grain size has highly refined grain sizes, ensuring a high tensile strength and a high elongation of the electrolytic copper foil. If the average grain size is too large, a reduced grain boundary density results in a tensile strength below an expected level. Conversely, excessively small average grain sizes introduce excessive grain boundary impurities, reducing the proportion of twin boundaries and decreasing the elongation.

In the above solution, the electrolytic copper foil according to the present disclosure has a high twin proportion, and the introduction of numerous nanotwin structures in the microscopic grain configuration can regulate the mechanical properties of the electrolytic copper foil. The coherent boundaries of nanotwins can effectively hinder dislocation motion, strengthening the material. When the deformation stress is sufficiently high, dislocations can also slip along the coherent twin boundaries, thereby effectively improving the plasticity and work-hardening capability of the material. A high twin proportion (greater than 50%) helps increase the elongation of a copper foil, while a low twin proportion (less than or equal to 50%) leads to a reduced elongation.

In some embodiments of the present disclosure, an elongation of the copper foil is greater than 5%.

In some embodiments of the present disclosure, a tensile strength of the copper foil is 600-900 MPa.

In the above solution, the electrolytic copper foil according to the present disclosure has a high tensile strength and/or a high elongation. The high tensile strength can effectively reduce the volume expansion rate of silicon-carbon negative electrode materials, and the high elongation can mitigate the risk of reduced battery cycle life caused by copper foil rupture during battery use, improving battery cycle stability and safety.

In some specific embodiments of the present disclosure, a thickness of the electrolytic copper foil is 4-10 $\mu$m.

In the above solution, battery processing yield and performance can be improved by limiting the thickness of the electrolytic copper foil within the above range. A thickness of a copper foil less than 4 μm increases the likelihood of coating process abnormalities during battery production and reduces an elongation. A thickness of a copper foil greater than 10 μm reduces a content of active substances in a battery and affects capacity density.

In a second typical embodiment of the present disclosure, a method for manufacturing a copper foil is further provided. The method includes the following steps:

electrolyzing an electrolyte using a pulse power supply at a predetermined pulse width and duty cycle to obtain a raw foil, where a current density of the pulse power supply is 8000-15000 A/m$^2$, the pulse width is 1-50 ms, and the duty cycle is 1%-30%; the electrolyte includes an electrolytic additive, and the electrolytic additive includes a brightener with a content of 12-20 mg/L, an auxiliary brightener with a content of 4-10 mg/L, a leveler with a content of 2-8 mg/L, polyethylene glycol with a content of 2-10 mg/L, and an inhibitor with a content of 6-30 mg/L; and

washing and passivating the raw foil to obtain an electrolytic copper foil.

It should be noted that the pulse width of the pulse power supply is defined as power-on time within each cycle, and the duty cycle refers to a proportion of power-on time (ton) within each cycle to total cycle time (ton+toff), i.e., ton/(ton+toff)×100%.

In the above solution, the pulse electroplating technique is employed to manufacture the copper foil. The pulse power supply effectively solves the previous problem of the reduced elongation of copper foils caused by reducing grain sizes and introducing numerous high-angle grain boundaries when using the electrolytic additive to enhance the tensile strength of copper foils. Based on the electrolytic additive with a specific composition, the present disclosure further defines the current density, pulse width, and duty cycle of the pulse power supply during the pulse electroplating process. A higher peak current density can increase overpotential of the electrodeposition reaction and enhance the driving force for copper ion deposition on the cathode drum surface, thereby yielding less crystalline particles. However, excessively rapid deposition rates may lead to uneven crystal growth, necessitating control of the pulse width to control the crystal size.

The above method for manufacturing a copper foil can not only produce electrolytic copper foils with an ultra-high tensile strength, but also ensure an elongation greater than 5%, thereby better resisting volume changes caused by material expansion during battery use and improving battery cycle stability and safety.

Preferably, in some embodiments, the used peak current density of the pulse power supply includes but is not limited to 8000 A/m$^2$, 9000 A/m$^2$, 10000 A/m$^2$, 11000 A/m$^2$, 12000 A/m$^2$, 13000 A/m$^2$, 14000 A/m$^2$, and 15000 A/m$^2$, significantly higher than the current density (6000-7000 A/m$^2$) used in conventional electrolytic conditions.

A higher current density combined with a shorter pulse width can significantly reduce the generation of large-sized crystals. Preferably, in some embodiments, the used pulse width includes but is not limited to 1 ms, 3 ms, 5 ms, 7 ms, 10 ms, 20 ms, 30 ms, 40 ms, and 50 ms. A single pulse can only generate crystalline particles a few nanometers in size, and multiple repeated pulses form a structure with numerous nanotwins stacked.

An appropriate duty cycle can reduce concentration polarization on the electrode surface. Copper ions and the additive are consumed and deposited on the electrode surface during the power-on time and replenished during the power-off time. Preferably, in some embodiments, the used duty cycle includes but is not limited to 1%, 5%, 10%, 13%, 15%, 20%, 25%, and 30%. A higher peak current density or a longer pulse width enhances consumption of active substances. Therefore, the above duty cycle ensures better enrichment of copper ions and the additive on the surface.

According to the present disclosure, a conventional electrolyte may be employed in combination with the above pulse electrolytic conditions to achieve the above effects. Alternatively, the electrolyte may be prepared using a common preparation method, such as dissolving elemental copper in sulfuric acid, adding an electrolyte additive and hydrochloric acid, stirring uniformly to obtain a first solution, and then filtering and purifying the first solution to obtain the electrolyte.

In some embodiments, the electrolyte further includes 60-120 g/L copper ions, 90-150 g/L sulfuric acid, and 20-40 mg/L chloride ions.

In the above solution, by limiting the dosage of each component in the electrolyte to a reasonable range, better synergistic effects can be achieved among the components, which is more favorable for the manufacturing of electrolytic copper foils with high tensile strengths and high elongations.

In some embodiments of the present disclosure, the brightener includes an organic sulfide; preferably, the brightener includes one or more of sodium polydisulfopropyl sulfonate (SPS), sodium polydisulfobutane sulfonate (SES), and sodium 3-mercapto-1-propanesulfonate (MPS).

In some embodiments of the present disclosure, the auxiliary brightener includes a nitrogen-containing organic sulfide; preferably, the auxiliary brightener includes one or more of polyisothiouronium propyl sulfonate inner salt (UPS), 3-benzothiazolyl-2-mercapto propane sulfonate sodium (ZPS), N,N-dimethyl propane sulfonate sodium (DPS), and tetrahydrothiazole thione (TTT).

In the above solution, the electrolytic additive employs an organic sulfide brightener in combination with a nitrogen-containing organic sulfide auxiliary brightener, to obtain electrolytic copper foils with ultra-high tensile strengths and effectively improve elongations of the electrolytic copper foils. The reason is that during copper crystal growth, organic sulfides tend to undergo specific adsorption on high-atom-density (111) crystal planes, inhibiting the growth of specific crystal planes to achieve grain refinement. Such specific adsorption often results in a pronounced (111) texture in internal crystals of copper foils. As a result, grains are prone to slip along specific crystal planes during copper foil stretching, leading to low tensile strengths and elongations. In contrast, nitrogen-containing organic sulfides, due to the impact of heteroatoms, alter their adsorption characteristics and aggregate on low-atom-density (200) crystal planes, reducing the proportion of (111) the crystal plane texture. In summary, the combined use of the organic sulfide brightener and the nitrogen-containing organic sulfide auxiliary brightener can effectively mitigate texture formation during nanotwin generation.

Preferably, in some embodiments, a concentration of the organic sulfide brightener in the electrolyte includes but is not limited to 12 mg/L, 13 mg/L, 14 mg/L, 15 mg/L, 16 mg/L, 17 mg/L, 18 mg/L, 19 mg/L, and 20 mg/L, and a concentration of the nitrogen-containing organic sulfide auxiliary brightener in the electrolyte includes but is not limited to 4 mg/L, 5 mg/L, 6 mg/L, 7 mg/L, 8 mg/L, 9 mg/L, and 10 mg/L.

In some specific embodiments of the present disclosure, the leveler includes a nitrogen-containing small-molecule compound; preferably, the leveler includes one or more of 2-mercaptopyridine (2-MP), 2-amino-4-methylbenzothiazole (AMBT), and tricyclazole (TCA).

In the above solution, the electrolytic additive employs a nitrogen-containing small-molecule compound instead of a conventional collagen leveler, to better meet the requirements of high frequency and peak current for a high molecular diffusion speed of the additive under pulse electroplating conditions. In addition, due to a higher charge density, the nitrogen-containing small-molecule leveler has stronger adsorption capacity on the copper foil surface, and can be introduced as a dopant into grain boundaries, enhancing the tensile strength to some extent.

Preferably, in some embodiments, a concentration of the used nitrogen-containing small-molecule leveler in the electrolyte includes but is not limited to 2 mg/L, 3 mg/L, 4 mg/L, 5 mg/L, 6 mg/L, 7 mg/L, and 8 mg/L.

In some specific embodiments of the present disclosure, a molecular weight of polyethylene glycol is 4000-10000 (hereinafter referred to as high-molecular-weight polyethylene glycol).

In some specific embodiments of the present disclosure, the inhibitor includes a polyether compound, where a molecular weight of the polyether compound is less than or equal to 2000. The above polyether compound may be a homopolyether or copolyether compound commonly used in electrolyte inhibitors. Preferably, the inhibitor includes one or more of polyethylene glycol with a molecular weight of 400-1000, polypropylene glycol with a molecular weight of 800-2000, and an ethylene glycol-propylene glycol copolymer with a molecular weight of 400-1000.

In the above solution, the electrolytic additive employs low-molecular-weight polyether or a copolymer thereof as an auxiliary inhibitor. Compared to high-molecular-weight polyethylene glycol, low-molecular-weight polyether has a higher diffusion rate, enabling timely replenishment of the inhibitor consumed on the cathode surface during the short off-time of high-frequency pulses.

Experiments show that through the synergistic effect of combining high-molecular-weight polyethylene glycol and low-molecular-weight polyether at a specific mass ratio (e.g., 1:2-1:4, further exemplified as 1:2, 1:3, or 1:4) as an electroplating inhibitor, the proportion of nanotwins in the electrolytic copper foil can be further effectively increased, achieving an ultra-high tensile strength while maintaining a high elongation.

Preferably, in some embodiments, a concentration of used polyethylene glycol in the electrolyte includes but is not limited to 2 mg/L, 4 mg/L, 6 mg/L, 8 mg/L, and 10 mg/L, and a concentration of the used polyether inhibitor in the electrolyte includes but is not limited to 6 mg/L, 12 mg/L, 18 mg/L, 24 mg/L, and 30 mg/L.

A temperature and an upward flow rate of the electrolyte for electrolyzing in the present disclosure refer to conventional direct current electrolytic copper foil conditions. In some embodiments of the present disclosure, a temperature of the electrolyzing is 50-60°C; during the electrolyzing, an upward flow rate of the electrolyte is 40-50 m$^3$/h.

In a third typical embodiment of the present disclosure, a negative electrode is further provided. The negative electrode includes a negative current collector, where the negative current collector includes a metal foil, and the metal foil includes the above copper foil.

In some embodiments, the negative electrode further includes an active material layer disposed on at least one side of the negative current collector. The negative electrode active material layer may include carbon-based active materials such as graphite and hard carbon. Furthermore, the negative electrode active material may include one or more selected from the group consisting of elementary substances or oxides of Si, Ge, Sn, Zn, Ni, Co, Li, and other elements. Furthermore, the negative electrode active material layer also includes a conductive agent and a binder.

In some specific embodiments of the present disclosure, a method for manufacturing the above negative electrode is as follows:

A commercially available silicon-carbon negative electrode material, conductive carbon black, styrene-butadiene rubber (SBR), and carboxymethyl cellulose (CMC) are mixed in high-purity water to prepare a slurry. Preferably, the slurry includes the following materials in part by weight: 95 parts of commercially available silicon-carbon negative electrode material, 2 parts of conductive carbon black, 2 parts of SBR, and 1 part of CMC.

The resulting slurry is then coated on one side of a copper foil using a doctor blade, with a single-sided loading of 7 $\pm$0.5 mg/cm$^2$. The electrode coated with the negative electrode material is dried at 115°C with gradient heating. The other side of the copper foil is then coated, and after drying, the dried copper foil sample is pressed using a roller to achieve an electrode density of 1.75$\pm$0.05 g/cm$^3$. The coated copper foil is then die-cut into a negative electrode sized 60 mm$\times$80 mm, and a thickness of the negative electrode is measured using a micrometer.

In a fourth typical embodiment of the present disclosure, a lithium-ion battery is further provided. The lithium-ion battery includes the above negative electrode.

The following illustrates the beneficial effects of the present disclosure with reference to specific examples and comparative examples.

In the present disclosure, examples where specific techniques or conditions are not specified shall be carried out according to techniques or conditions described in literature in the art or according to product specifications. Instruments where the manufacturer is not specified are all conventional products that can be purchased through regular channels. Raw materials used in the present disclosure are all readily available on the domestic market.

Methods for testing the microstructure and basic physical properties of electrolytic copper foils manufactured in all embodiments of the present disclosure are as follows:

Electron backscatter diffraction (EBSD) test: A C-Swift EBSD detector manufactured by Oxford Instruments, UK, is used to observe the microstructure of partial copper foil samples from each example and comparative example. To facilitate observation of grain boundary contours, the cross-section is pre-polished using an ion mill for 20 min.

Tensile strength and elongation test: According to the test method GB/T 29847-2013, an HY-0230 universal material testing machine manufactured by Shanghai Hengyi Precision Instrument Co., Ltd. is used to test a tensile strength and an elongation of an electrolytic copper foil at a strain rate of 0.8 mm/s and a room temperature (approximately 25°C). The tensile test specimens are strip-shaped, with a total length of 100 mm and a width of 15 mm. A sample is measured three times, and the average value is taken as a final tensile strength and elongation of the sample.

The method for manufacturing and testing lithium-ion batteries is as follows:

In parts by weight, 95 parts of commercially available silicon-carbon negative electrode material, 2 parts of conductive carbon black, 2 parts of SBR, and 1 part of CMC are mixed in high-purity water to prepare a slurry.

The resulting slurry is then coated on one side of a copper foil using a doctor blade, with a single-sided loading of 7 $\pm$0.5 mg/cm$^2$. The electrode coated with the negative electrode material is dried at 115°C with gradient heating. The other side of the copper foil is then coated, and after drying, the dried copper foil sample is pressed using a roller to achieve an electrode density of 1.75$\pm$0.05 g/cm$^3$. The coated copper foil is then die-cut into a negative electrode sized 60 mm$\times$80 mm, and a thickness of the negative electrode is measured using a micrometer.

The resulting negative electrode is assembled with a commercially available separator, an electrolyte, and a positive electrode to manufacture a pouch cell. The battery is subjected to 100 charge-discharge cycles at a rate of 2C. After cycling, the battery is disassembled to remove the negative electrode, and a thickness of the cycled electrode is measured using a micrometer. An expansion rate is calculated based on the electrode thickness difference before and after cycling. In addition, a strong flashlight is used to observe whether the electrode exhibited any damage or light transmission.

In the present disclosure, the double-sided bright copper foil has a D (Drum) side and an A (Air) side. The D side is the side in contact with a cathode drum, and the other side is the A side.

**Example 1**

This example provides an electrolytic copper foil, a method for manufacturing the same includes the following steps:

(1) Elemental copper is dissolved in sulfuric acid to form a copper sulfate-sulfuric acid solution. An electrolytic additive and hydrochloric acid are then added and stirred uniformly to obtain a first solution. 1 g/m$^3$ activated carbon and diatomaceous earth are added to the resulting first solution and stirred. Organic impurities and suspended solids are then removed using a stainless steel filter cloth, followed by two filtrations to obtain a purified electrolyte for electrolysis.

The resulting electrolyte has a copper ion concentration of 86 g/L, a sulfuric acid concentration of 120 g/L, and a chloride ion (hydrochloric acid) concentration of 20 mg/L. The electrolyte contains 13 mg/L organic sulfide brightener SPS, 6 mg/L nitrogen-containing organic sulfide auxiliary brightener UPS, 4 mg/L small-molecule leveler 2-MP, 6 mg/L polyethylene glycol with a molecular weight of 4000, and 18 mg/L polyether inhibitor (polyethylene glycol with a molecular weight of 400).

(2) Using a titanium drum as the cathode and an iridium-tantalum-coated titanium plate as the anode, the above electrolyte is electrolyzed with a pulse power supply. Under a peak current density of 13000 A/m$^2$, a pulse width of 3 ms, and a duty cycle of 5%, a raw copper foil with a thickness of 6 $\mu$m is manufactured. A temperature of the electrolyzing is 55°C, and an upward flow rate of the electrolyte is 45 m$^3$/h.

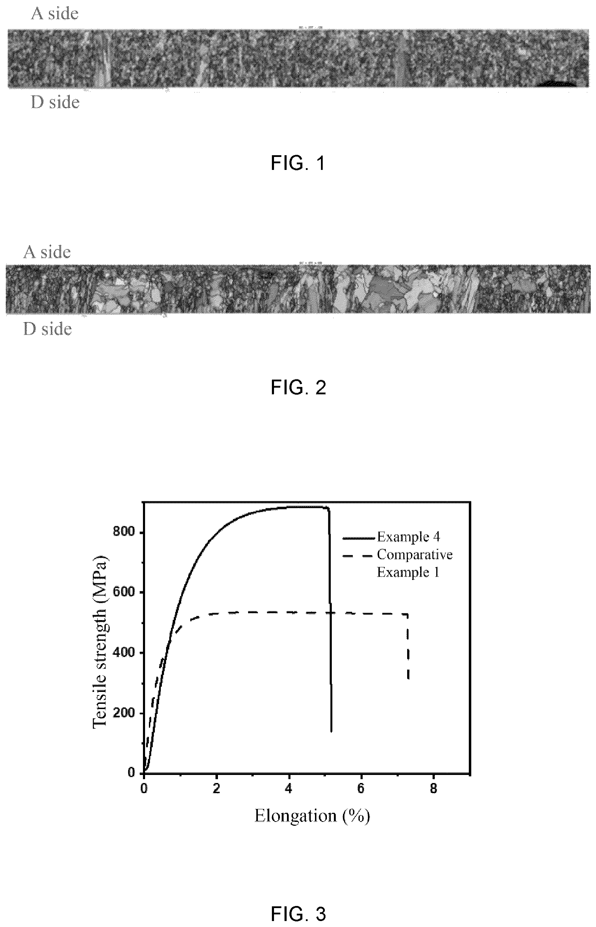

(3) The resulting raw copper foil is washed, passivated, and dried to obtain a finished electrolytic copper foil before cutting. Referring to FIG. 1, the resulting electrolytic copper foil has ultrafine grain sizes and uniform grain size distribution.

The microstructure of the cross-section of the above electrolytic copper foil obtained through pulse electroplating is then observed and studied by EBSD, to measure an average grain size, an area-weighted average grain size, and a twin grain proportion of the sample.

Mechanical properties of the resulting electrolytic copper foil are then tested to obtain a tensile strength and an elongation of the sample.

The electrolytic copper foil is then assembled into a pouch cell, and cycle testing is performed to check whether the negative electrode copper foil is damaged.

**Example 2**

This example provides an electrolytic copper foil, a method for manufacturing the same includes the following steps:

(1) Elemental copper is dissolved in sulfuric acid to form a copper sulfate-sulfuric acid solution. An electrolytic additive and hydrochloric acid are then added and stirred uniformly to obtain a first solution. 1 g/m$^3$ activated carbon and diatomaceous earth are added to the resulting first solution and stirred. Organic impurities and suspended solids are then removed using a stainless steel filter cloth, followed by two filtrations to obtain a purified electrolyte for electrolysis.

The resulting electrolyte has a copper ion concentration of 109 g/L, a sulfuric acid concentration of 130 g/L, and a chloride ion (hydrochloric acid) concentration of 22 mg/L. The electrolyte contains a total of 16 mg/L SES and SPS with a mass ratio of 1:1, 4 mg/L auxiliary brightener TTT, 3 mg/L small-molecule leveler AMBT, 4 mg/L polyethylene glycol with a molecular weight of 8000, and 12 mg/L polyethylene glycol with a molecular weight of 1000.

(2) Using a titanium drum as the cathode and an iridium-tantalum-coated titanium plate as the anode, the above electrolyte is electrolyzed with a pulse power supply. Under a peak current density of 9000 A/m$^2$, a pulse width of 30 ms, and a duty cycle of 25%, a raw copper foil with a thickness of 6 $\mu$m is manufactured. A temperature of the electrolyzing is 55°C, and an upward flow rate of the electrolyte is 45 m$^3$/h.

(3) The resulting raw copper foil is washed, passivated, and dried to obtain a finished electrolytic copper foil before cutting.

The microstructure of the cross-section of the above electrolytic copper foil obtained through pulse electroplating is then observed and studied by EBSD, to measure an average grain size, an area-weighted average grain size, and a twin grain proportion of the sample.

Mechanical properties of the resulting electrolytic copper foil are then tested to obtain a tensile strength and an elongation of the sample.

The electrolytic copper foil is then assembled into a pouch cell, and cycle testing is performed to check whether the negative electrode copper foil is damaged.

**Example 3**

This example provides an electrolytic copper foil, a method for manufacturing the same includes the following steps:

(1) Elemental copper is dissolved in sulfuric acid to form a copper sulfate-sulfuric acid solution. An electrolytic additive and hydrochloric acid are then added and stirred uniformly to obtain a first solution. 1 g/m$^3$ activated carbon and diatomaceous earth are added to the resulting first solution and stirred. Organic impurities and suspended solids are then removed using a stainless steel filter cloth, followed by two filtrations to obtain a purified electrolyte for electrolysis.

The resulting electrolyte has a copper ion concentration of 63 g/L, a sulfuric acid concentration of 105 g/L, and a chloride ion (hydrochloric acid) concentration of 38 mg/L. The electrolyte contains a total of 15 mg/L SPS and MPS with a mass ratio of 1:1, 8 mg/L DPS, 2 mg/L small-molecule leveler TCA, 3 mg/L polyethylene glycol with a molecular weight of 80000, and 9 mg/L propylene glycol with a molecular weight of 800.

(3) Using a titanium drum as the cathode and an iridium-tantalum-coated titanium plate as the anode, the above electrolyte is electrolyzed with a pulse power supply. Under a peak current density of 11000 A/m$^2$, a pulse width of 10 ms, and a duty cycle of 20%, a raw copper foil with a thickness of 6 $\mu$m is manufactured. A temperature of the electrolyzing is 55°C, and an upward flow rate of the electrolyte is 45 m$^3$/h.

(3) The resulting raw copper foil is washed, passivated, and dried to obtain a finished electrolytic copper foil before cutting.

The microstructure of the cross-section of the above electrolytic copper foil obtained through pulse electroplating is then observed and studied by EBSD, to measure an average grain size, an area-weighted average grain size, and a twin grain proportion of the sample.

Mechanical properties of the resulting electrolytic copper foil are then tested to obtain a tensile strength and an elongation of the sample.

The electrolytic copper foil is then assembled into a pouch cell, and cycle testing is performed to check whether the negative electrode copper foil is damaged.

## Example 4

This example provides an electrolytic copper foil, a method for manufacturing the same includes the following steps:

(1) Elemental copper is dissolved in sulfuric acid to form a copper sulfate-sulfuric acid solution. An electrolytic additive and hydrochloric acid are then added and stirred uniformly to obtain a first solution. 1 g/m$^3$ activated carbon and diatomaceous earth are added to the resulting first solution and stirred. Organic impurities and suspended solids are then removed using a stainless steel filter cloth, followed by two filtrations to obtain a purified electrolyte for electrolysis.

The resulting electrolyte has a copper ion concentration of 117 g/L, a sulfuric acid concentration of 110 g/L, and a chloride ion (hydrochloric acid) concentration of 30 mg/L. The electrolyte contains a total of 19 mg/L SPS and MPS with a mass ratio of 1:1, a total of 7 mg/L DPS and TTT with a mass ratio of 1:1, 6 mg/L small-molecule leveler 2-MP, 7 mg/L polyethylene glycol with a molecular weight of 10000, and 21 mg/L ethylene glycol-propylene glycol copolymer with a molecular weight of 1000.

(2) Using a titanium drum as the cathode and an iridium-tantalum-coated titanium plate as the anode, the above electrolyte is electrolyzed with a pulse power supply. Under a peak current density of 14000 A/m$^2$, a pulse width of 7 ms, and a duty cycle of 13%, a raw copper foil with a thickness of 6 $\mu$m is manufactured. A temperature of the electrolyzing is 55°C, and an upward flow rate of the electrolyte is 45 m$^3$/h.

(3) The resulting raw copper foil is washed, passivated, and dried to obtain a finished electrolytic copper foil before cutting.

The microstructure of the cross-section of the above electrolytic copper foil obtained through pulse electroplating is then observed and studied by EBSD, to measure an average grain size, an area-weighted average grain size, and a twin grain proportion of the sample.

Mechanical properties of the resulting electrolytic copper foil are then tested to obtain a tensile strength and an elongation of the sample.

The electrolytic copper foil is then assembled into a pouch cell, and cycle testing is performed to check whether the negative electrode copper foil is damaged.

## Example 5

This example provides an electrolytic copper foil, a method for manufacturing the same differs from that of Example 4 only in that a duty cycle of a pulse power supply is 1%, with the others being the same as in Example 4.

## Example 6

This example provides an electrolytic copper foil, a method for manufacturing the same differs from that of Example 4 only in that a duty cycle of a pulse power supply is 30%, with the others being the same as in Example 4.

**Example 7**

This example provides an electrolytic copper foil, a method for manufacturing the same differs from that of Example 4 only in that a pulse width of a pulse power supply is 5 ms, with the others being the same as in Example 4.

**Example 8**

This example provides an electrolytic copper foil, a method for manufacturing the same differs from that of Example 4 only in that a pulse width of a pulse power supply is 50 ms, with the others being the same as in Example 4.

**Example 9**

This example provides an electrolytic copper foil, a method for manufacturing the same differs from that of Example 4 only in that a peak current density of a pulse power supply is 8000 A/m$^2$, with the others being the same as in Example 4.

**Example 10**

This example provides an electrolytic copper foil, a method for manufacturing the same differs from that of Example 4 only in that a peak current density of a pulse power supply is 15000 A/m$^2$, with the others being the same as in Example 4.

**Example 11**

This example provides an electrolytic copper foil, a method for manufacturing the same differs from that of Example 4 only in that a concentration of an organic sulfide brightener in an electrolyte is 20 mg/L, and a concentration of a nitrogen-containing organic sulfide auxiliary brightener is 6 mg/L, with the others being the same as in Example 4.

**Example 12**

This example provides an electrolytic copper foil, a method for manufacturing the same differs from that of Example 4 only in that a concentration of an organic sulfide brightener in an electrolyte is 18 mg/L, and a concentration of a nitrogen-containing organic sulfide auxiliary brightener is 10 mg/L, with the others being the same as in Example 4.

**Example 13**

This example provides an electrolytic copper foil, a method for manufacturing the same differs from that of Example 4 only in that a concentration of a small-molecule leveler in an electrolyte is 5 mg/L, with the others being the same as in Example 4.

**Example 14**

This example provides an electrolytic copper foil, a method for manufacturing the same differs from that of Example 4 only in that a concentration of polyethylene glycol in an electrolyte is 2 mg/L, and a concentration of a polyether inhibitor is 6 mg/L, with the others being the same as in Example 4.

**Example 15**

This example provides an electrolytic copper foil, a method for manufacturing the same differs from that of Example 4 only in that a concentration of polyethylene glycol in an electrolyte is 10 mg/L, and a concentration of a polyether inhibitor is 30 mg/L, with the others being the same as in Example 4.

**Comparative Example 1**

Comparative Example 1 is a comparative example to Example 4, providing a high-tensile copper foil manufactured using a conventional direct current electroplating method. Specific manufacturing steps of the copper foil are as follows:

(1) Elemental copper is dissolved in sulfuric acid to form a copper sulfate-sulfuric acid solution. An electrolytic additive and hydrochloric acid are then added and stirred uniformly to obtain a first solution. 1 g/m$^3$ activated carbon and diatomaceous earth are added to the resulting first solution and stirred. Organic impurities and suspended solids are then removed using a stainless steel filter cloth, followed by two filtrations to obtain a purified electrolyte for electrolysis. The resulting electrolyte has a copper ion concentration of 117 g/L, a sulfuric acid concentration of 110 g/L, and a chloride ion (hydrochloric acid) concentration of 30 mg/L. The resulting electrolyte contains a total of 19 mg/L SPS and MPS with a mass ratio of 1:1, a total of 7 mg/L DPS and TTT with a mass ratio of 1:1, 6 mg/L small-molecule leveler 2-MP, 7 mg/L polyethylene glycol with a molecular weight of 10000, and 21 mg/L ethylene glycol-propylene glycol copolymer with a molecular weight of 1000.

(2) Using a titanium drum as the cathode and an iridium-tantalum-coated titanium plate as the anode, the above electrolyte is electrolyzed with a constant current power supply. Under a current density of 6500 A/m$^2$, a raw copper foil with a thickness of 6 $\mu$m is manufactured A temperature of the electrolyzing is 55°C, and an upward flow rate of the electrolyte is 45 m$^3$/h.

(3) The resulting raw copper foil is washed, passivated, and dried to obtain a finished electrolytic copper foil before cutting. As shown in FIG. 2, the resulting electrolytic copper foil has a larger average grain size, and the grain size distribution exhibited a significant increasing trend from the D side to the A side.

The microstructure of the cross-section of the above electrolytic copper foil obtained through pulse electroplating is then observed and studied by EBSD, to measure an average grain size, an area-weighted average grain size, and a twin grain proportion of the sample.

Mechanical properties of the resulting electrolytic copper foil are then tested to obtain a tensile strength and an elongation of the sample.

The electrolytic copper foil is then assembled into a pouch cell, and cycle testing is performed to check whether the negative electrode copper foil is damaged.

**Comparative Example 2**

This comparative example provides an electrolytic copper foil, a method for manufacturing the same differs from that of Example 4 only in that a pulse width of a pulse power supply is 60 ms, with the others being the same as in Example 4.

**Comparative Example 3**

This comparative example provides an electrolytic copper foil, a method for manufacturing the same differs from that of Example 4 only in that a duty cycle of a pulse power supply is 40%, with the others being the same as in Example 4.

**Comparative Example 4**

This comparative example provides an electrolytic copper foil, a method for manufacturing the same differs from that of Example 4 only in that a peak current density of a pulse power supply is 7000 A/m$^2$, with the others being the same as in Example 4.

**Comparative Example 5**

This comparative example provides an electrolytic copper foil, a method for manufacturing the same differs from that of Example 4 only in that a concentration of an organic sulfide brightener in an electrolyte is 24 mg/L, and a concentration of a nitrogen-containing organic sulfide auxiliary brightener is 2 mg/L, with the others being the same as in Example 4.

**Comparative Example 6**

This comparative example provides an electrolytic copper foil, a method for manufacturing the same differs from that of Example 4 only in that a concentration of a small-molecule leveler in an electrolyte is 10 mg/L, with the others being the same as in Example 4.

**Comparative Example 7**

This comparative example provides an electrolytic copper foil, a method for manufacturing the same differs from that of Example 4 only in that a concentration of polyethylene glycol in an electrolyte is 12 mg/L, and a concentration of a polyether inhibitor is 36 mg/L, with the others being the same as in Example 4.

Table 1 below lists microscopic grain sizes, basic physical properties, and battery expansion rate test results of electrolytic copper foil samples manufactured according to the examples and comparative examples of the present disclosure.

Table 1

| | Average grain size ($\mu$m) | Area-weighted average grain size ($\mu$m) | Twin grain proportion | Tensile strength (MPa) | Elongation (%) | Electrode volume expansion rate (%) | Damaged |
|---|---|---|---|---|---|---|---|
| Example 1 | 0.3 | 0.5 | 76% | 817 | 6.5% | 20% | No |
| Example 2 | 0.4 | 0.8 | 54% | 623 | 7.6% | 25% | No |
| Example 3 | 0.4 | 0.7 | 58% | 713 | 7.3% | 24% | No |
| Example 4 | 0.2 | 0.3 | 86% | 884 | 5.3% | 18% | No |
| Example 5 | 0.3 | 0.5 | 80% | 796 | 5.1% | 24% | No |
| Example 6 | 0.4 | 0.8 | 50% | 604 | 7.8% | 25% | No |
| Example 7 | 0.3 | 0.4 | 84% | 871 | 5.1% | 20% | No |
| Example 8 | 0.4 | 0.8 | 56% | 673 | 6.3% | 25% | No |
| Example 9 | 0.4 | 0.5 | 73% | 644 | 7.9% | 25% | No |
| Example 10 | 0.2 | 0.4 | 81% | 775 | 6.0% | 23% | No |
| Example 11 | 0.2 | 0.3 | 85% | 880 | 5.4% | 19% | No |
| Example 12 | 0.4 | 0.6 | 74% | 632 | 8.0% | 25% | No |
| Example 13 | 0.3 | 0.8 | 63% | 813 | 5.0% | 19% | No |
| Example 14 | 0.3 | 0.6 | 77% | 857 | 5.8% | 20% | No |
| Example 15 | 0.3 | 0.8 | 66% | 785 | 5.1% | 21% | No |
| Comparative Example 1 | 0.5 | 1.2 | 77% | 530 | 7.3% | 40% | Yes |
| Comparative Example 2 | 0.4 | 1.0 | 28% | 759 | 4.1% | 27% | Yes |
| Comparative Example 3 | 0.5 | 1.0 | 34% | 698 | 3.2% | 30% | Yes |
| Comparative Example 4 | 0.6 | 0.9 | 56% | 572 | 7.8% | 35% | Yes |
| Comparative Example 5 | 0.3 | 0.7 | 45% | 739 | 3.7% | 23% | Yes |
| Comparative Example 6 | 0.2 | 0.5 | 32% | 853 | 2.5% | 24% | Yes |
| Comparative Example 7 | 0.3 | 0.9 | 24% | 568 | 2.1% | 46% | Yes |

First, in Example 4 and Comparative Example 1, samples are manufactured in the same electrolyte using the pulse electroplating method and direct current electroplating method, respectively. Comparing FIGs. 1 and 2, the electrolytic copper foil manufactured using the direct current electroplating method has a larger average grain size, and the grain size distribution shows a significant increasing trend from the D side to the A side, indicating that the pulse electroplating method employed in Example 4 can effectively achieve grain refinement. The intermittent deposition of copper ions under the pulse electric field also helps achieve consistent grain size distribution from the D side to the A side. In addition, the higher twin grain proportion in Comparative Example 1 is due to its uneven grain size distribution, where individual larger twins provide greater grain boundary lengths and twin areas. FIG. 3 shows a comparison of tensile strength and elongation curves of electrolytic copper foils from Example 4 and Comparative Example 1. It can be learned that, although the elongation in Comparative Example 1 is higher than that in Example 4, the tensile strength in Comparative Example 1 is lower. This is consistent with the trends in the average grain size and twin grain proportion revealed by EBSD. The lower tensile strength leads to greater volume changes of the electrolytic copper foil during charge-discharge processes. Repeated stretching causes metal fatigue, and consequently results in rupture.

Furthermore, tensile strengths in Example 4 and Comparative Example 6 are similar. However, due to an unreasonable electrolyte formulation, excessive doped grain boundaries are introduced, reducing the proportion of nanotwins. As a result, the elongation is low, and rupture easily occurs during battery charging cycles. After the rupture, the ability of the current collector to limit the expansion of the negative electrode material weakens. As a result, the volume expansion rate in Comparative Example 6 is high.

Furthermore, Examples 1-15 achieve the tensile strength ranging from 600 to 900 MPa while maintaining the elongation above 5% by adjusting power supply parameters (duty cycle, pulse width, and peak current density) and/or electrolyte formulations.

In summary, using the pulse electroplating technology according to the present disclosure, electrolytic copper foils with highly refined grain sizes, high nanotwin proportions, and ultra-high tensile strengths can be manufactured. Such electrolytic copper foils can effectively suppress volume changes in silicon-carbon negative electrode materials during charge-discharge processes. In addition, the electrolytic copper foil according to the present disclosure has a high elongation, which can effectively prevent copper foil rupture caused by repeated volume changes of the silicon-carbon negative electrode materials during charge-discharge processes. Lithium-ion battery negative electrodes containing the electrolytic copper foil according to the present disclosure thus exhibit better cycle life and safety.

Finally, it should be noted that the above embodiments are only used to illustrate the technical solutions of the present disclosure and are not intended to limit them. Although the present disclosure has been described in detail with reference to the foregoing embodiments, those of ordinary skill in the art should understand that they can still modify the technical solutions described in the foregoing embodiments or replace some of the technical features with equivalents. Such modifications or replacements do not cause the essence of the corresponding technical solutions to deviate from the spirit and scope of the technical solutions of the embodiments of the present disclosure.

**Claims**

1. A copper foil, wherein the copper foil comprises ultrafine grains and nanotwins, with an average grain size of the copper foil of 0.2-0.4 $\mu$m, an area-weighted average grain size of 0.3-0.8 $\mu$m, and a nanotwin grain proportion of the copper foil greater than 50% as measured by electron backscatter diffraction (EBSD).

2. The copper foil according to claim 1, wherein an elongation of the copper foil is greater than 5%.

3. The copper foil according to claim 1 or 2, wherein a tensile strength of the copper foil is 600-900 MPa.

4. The copper foil according to claim 1, wherein a thickness of the copper foil is 4-10 $\mu$m.

5. A method for manufacturing a copper foil, wherein the method comprises the following steps:

   electrolyzing an electrolyte using a pulse power supply at a predetermined pulse width and duty cycle to obtain a raw foil, wherein a current density of the pulse power supply is 8000-15000 A/m2, the pulse width is 1-50 ms, and the duty cycle is 1%-30%; the electrolyte comprises an electrolytic additive, and the electrolytic additive comprises a brightener with a content of 12-20 mg/L, an auxiliary brightener with a content of 4-10 mg/L, a leveler with a content of 2-8 mg/L, polyethylene glycol with a content of 2-10 mg/L, and an inhibitor with a content of 6-30 mg/L; and
   washing and passivating the raw foil to obtain an electrolytic copper foil.

6. The method according to claim 5, wherein the electrolyte further comprises 60-120 g/L copper ions, 90-150 g/L sulfuric acid, and 20-40 mg/L chloride ions.

7. The method according to claim 6, wherein the brightener comprises an organic sulfide; the brightener comprises one or more of sodium polydisulfopropyl sulfonate, sodium polydisulfobutane sulfonate, and sodium 3-mercapto-1-propanesulfonate;

and/or, the auxiliary brightener comprises a nitrogen-containing organic sulfide; the auxiliary brightener comprises one or more of polyisothiouronium propyl sulfonate inner salt, 3-benzothiazolyl-2-mercapto propane sulfonate sodium, N, N-dimethyl propane sulfonate sodium, and tetrahydrothiazole thione;

and/or, the leveler comprises a nitrogen-containing small-molecule compound; the leveler comprises one or more of 2-mercaptopyridine, 2-amino-4-methylbenzothiazole, and tricyclazole;

and/or, a molecular weight of polyethylene glycol is 4000-10000;

and/or, the inhibitor comprises a polyether compound, wherein a molecular weight of the polyether compound is less than or equal to 2000; the inhibitor comprises one or more of polyethylene glycol with a molecular weight of 400-1000, polypropylene glycol with a molecular weight of 800-2000, and an ethylene glycol-propylene glycol copolymer with a molecular weight of 400-1000;

and/or, a mass ratio of polyethylene glycol to the polyether compound is 1:2-1:4.

8. The method according to any one of claims 5 to 7, wherein a temperature of the electrolyzing is 50-60°C; during the electrolyzing, an upward flow rate of the electrolyte is 40-50 m3/h.

9. A negative electrode, comprising a negative current collector, wherein the negative current collector comprises a metal foil, and the metal foil comprises the copper foil according to any one of claims 1-4.

10. A lithium-ion battery, comprising a negative electrode, wherein the negative electrode comprises the negative electrode according to claim 9.

A side

D side

FIG. 1

A side

D side

FIG. 2

FIG. 3

## INTERNATIONAL SEARCH REPORT

| International application No. |
|---|
| **PCT/CN2024/097599** |

**A. CLASSIFICATION OF SUBJECT MATTER**

C25D1/04(2006.01)i; C25D5/18(2006.01)i; C25D3/38(2006.01)i; H01M4/66(2006.01)i; H01M10/0525(2010.01)i

According to International Patent Classification (IPC) or to both national classification and IPC

**B. FIELDS SEARCHED**

Minimum documentation searched (classification system followed by classification symbols)

IPC: C25D1/-, C25D5/-, H01M4/-, C25D3/-, H01M10/-

Documentation searched other than minimum documentation to the extent that such documents are included in the fields searched

Electronic data base consulted during the international search (name of data base and, where practicable, search terms used)

CNTXT, ENTXTC, CNKI, ISI_WEB OF SCIENCE: 铜箔, 孪晶, 尺寸, 粒径, 脉冲, 光亮剂, 整平剂, 抑制剂, 聚乙二醇, 占空比, 电流, 密度, 宽度, 脉宽, copper, foil, twin, crystal, size, diameter, Pulse, leveling, inhibit+, brightening, current, density, pulse, width, duty, Polyethylene glycol, PEG

**C. DOCUMENTS CONSIDERED TO BE RELEVANT**

| Category* | Citation of document, with indication, where appropriate, of the relevant passages | Relevant to claim No. |
|---|---|---|
| X | CN 117987887 A (JIUJIANG DEFU TECHNOLOGY CO., LTD.) 07 May 2024 (2024-05-07) description, embodiment 4, and paragraphs [0061] and [0168] | 1-4, 9, 10 |
| A | CN 116791155 A (JIUJIANG DEFU TECHNOLOGY CO., LTD.) 22 September 2023 (2023-09-22) description, specific embodiments | 1-10 |
| A | CN 114908386 A (JIANGXI UNIVERSITY OF SCIENCE AND TECHONOLOGY et al.) 16 August 2022 (2022-08-16) description, embodiment 4 | 1-10 |
| A | CN 117987887 A (JIUJIANG DEFU TECHNOLOGY CO., LTD.) 07 May 2024 (2024-05-07) description, embodiment 4, and paragraphs [0061] and [0168] | 5-8 |
| A | CN 114875457 A (INSTITUTE OF CORROSION SCIENCE AND TECHNOLOGY) 09 August 2022 (2022-08-09) entire description | 1-10 |

☑ Further documents are listed in the continuation of Box C.     ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **06 February 2025** | **12 February 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/097599** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 116180162 A (INSTITUTE OF CORROSION SCIENCE AND TECHNOLOGY) 30 May 2023 (2023-05-30)<br>entire description | 1-10 |
| A | KR 970015792 A (ILJIN MATERIALS CO., LTD.) 28 April 1997 (1997-04-28)<br>entire description | 1-10 |

Form PCT/ISA/210 (second sheet) (July 2022)

**INTERNATIONAL SEARCH REPORT**
Information on patent family members

| International application No. |
| PCT/CN2024/097599 |

| Patent document cited in search report | | | Publication date (day/month/year) | Patent family member(s) | | | Publication date (day/month/year) |
|---|---|---|---|---|---|---|---|
| CN | 117987887 | A | 07 May 2024 | None | | | |
| CN | 116791155 | A | 22 September 2023 | None | | | |
| CN | 114908386 | A | 16 August 2022 | None | | | |
| CN | 114875457 | A | 09 August 2022 | None | | | |
| CN | 116180162 | A | 30 May 2023 | None | | | |
| KR | 970015792 | A | 28 April 1997 | KR | 0156989 | B1 | 16 November 1998 |

Form PCT/ISA/210 (patent family annex) (July 2022)

## EP 4 696 817 A1

**Patent documents cited in the description**

- GB 298472013 T